# EUROPEAN PATENT APPLICATION

(11) **EP 2 518 022 A1**
(43) Date of publication of application: **31.10.2012**
(21) Application number: 10839458.6
(22) Date of filing: 22.12.2010
(51) Int. Cl.: C02F 1/58

(54) **PRETREATMENT METHOD AND TREATMENT FACILITY FOR WASTEWATER THAT CONTAINS FLUORINE AND SILICON**

(30) Priority: 22.12.2009 JP 2009290854
(71) Applicant: Kobelco Eco-solutions Co., Ltd., Kobe-shi, Hyogo 651-0072 (JP)
(72) Inventor: TANIDA, Katsuyoshi, Kobe-shi Hyogo 651-2241 (JP); CHIFUKU, Hiroyuki, Kobe-shi Hyogo 651-0072 (JP); ONODA, Sousuke, Kobe-shi Hyogo 651-2241 (JP)
(74) Representative: TBK
(86) International application number: PCT/JP2010/073150
(87) International publication number: WO 2011/078228

(57) **Abstract**

Provided is a wastewater treatment technology (in particular, pretreatment technology) that, in comparison to existing technologies, can reduce the quantity of sludge generated as a result of processing wastewater that contains fluorine and silicon.

Before adding a calcium compound to wastewater that contains fluorine and silicon and performing coagulation-sedimentation treatment on said wastewater, as a pretreatment, sodium hydroxide is added to the wastewater (first reaction tank 1), sodium silicofluoride is precipitated, and the precipitate sodium silicofluoride is removed via solid-liquid separation (first sedimentation tank 2).

## Description

### TECHNICAL FIELD

The present invention relates to a pretreatment method and a treatment facility for wastewater that contains fluorine and silicon.

### BACKGROUND ART

Traditionally, wastewater that contains fluorine and silicon, which is produced from plants involving a PFC (perfluoro carbon) gas treatment process or a silicon etching process, such as a plant of semiconductors, a plant of solar batteries, a plant of liquid crystals, has been treated as follows. Namely, a calcium compound is added to wastewater that contains fluorine and silicon to adjust the wastewater to alkaline and cause a reaction to generate sludge containing calcium fluoride (CaF₂) and silica (SiO₂). The sludge generated is then separated and subjected to an industrial waste treatment.

If the quantity of sludge is reduced at this time, the costs for processing industrial waste (sludge) are reduced as compared with existing technologies.

For example, Patent Document 1 suggests a method for reducing the quantity of sludge generated from fluorine-containing wastewater. In the method described in Patent Document 1, two reaction tanks for generating calcium fluoride by adding a calcium compound to fluorine-containing wastewater are serially connected, and the calcium fluoride is generated in two steps. If fluoride ion is roughly removed at first, generation of minute calcium fluoride is restrained even if an equivalent or more of calcium compound relative to the remaining fluoride ion is added. As a result, sludge with low water content is generated.

### [Prior Art Document]

### [Patent Document]

[Patent Document 1] Japanese Unexamined Patent Publication No. 165990/2009 (Tokukai 2009-165990)

### DISCLOSURE OF THE INVENTION

### TECHNICAL PROBLEM

However, when the subject of the treatment is wastewater that contains not only fluorine but also silicon, sludge containing calcium fluoride (CaF₂) and silica (SiO₂) is generated, as mentioned above. Silica (SiO₂) has high water content even after dehydration and is bonded with oxygen. Therefore, when wastewater contains not only fluorine but also silicon, there will be a large quantity of sludge that is waste.

The method described in Patent Document 1 lowers the water content of the calcium fluoride sludge by restraining generation of minute calcium fluoride, thereby reducing the quantity of sludge generated. However, as long as the sludge generated is calcium fluoride sludge, there is a limit to the quantity of sludge reducible.

The present invention is made in view of the above problem and it is an object of the present invention to provide a wastewater treatment technology (particularly, pretreatment technology) whereby the quantity of sludge generated by processing wastewater that contains fluorine and silicon is reduced more than it would be by existing technologies.

### TECHNICAL SOLUTION

To achieve the object of the present invention, the inventors have conducted dedicated study. As the result, the inventors found that the object is achieved with a pretreatment of adding an alkaline sodium compound to wastewater that contains fluorine and silicon to precipitate silicon and fluorine as sodium silicofluoride (Na₂SiF₆), before coagulation-sedimentation treatment which is performed on the wastewater by adding calcium compound to the wastewater. Based on this finding, the inventors have arrived at the present invention.

A first aspect of the present invention is a pretreatment method for wastewater that contains fluorine and silicon, which precedes a coagulation-sedimentation treatment to be performed on the wastewater by adding thereto a calcium compound, the method including the steps of: a first step of adding alkaline sodium compound to the wastewater to precipitate sodium silicofluoride; and a second step of performing solid-liquid separation to remove sodium silicofluoride precipitated in the first step.

With this, silicon and fluorine are precipitated in advance as sodium silicofluoride (Na₂SiF₆). This restrains both the quantity of silica (SiO₂) precipitated (generated) whose water content is high even after dehydration, and the quantity of calcium fluoride (CaF₂) precipitated (generated). Sodium silicofluoride is constituted of sodium, silicon, and fluorine. Unlike silica, sodium silicofluoride is not bonded with oxygen. Thus, even when comparing the dry weights, the quantity precipitated is restrained. As the result, the total quantity of sludge generated by processing wastewater that contains fluorine and silicon is reduced more than it would be by existing technologies.

In cases of adding calcium in coagulation-sedimentation treatment of fluorine, calcium fluoride and silica are precipitated as shown in the following formula.

SiF₆ ²⁻ + 3Ca (OH) ₂ → 3CaF₂ + SiO₂ + 2H₂O + 2OH⁻

Therefore, precipitation per mol of fluosilicate is 294g which is the sum of 3 mol (234g) of calcium fluoride and 1 mol (60g) of silica.

On the other hand, reaction to precipitate the sodium silicofluoride is as shown in the formula below.

SiF₆²⁻ + 2NaOH --> Na₂SiF₆ + 2OH⁻

Therefore, precipitation per mol of fluosilicate is 1 mol (188g) of sodium silicofluoride. This is less than the amount of precipitation in cases of adding calcium. Since the sludge of silica after dehydration has higher water content than the sludge of sodium silicofluoride, there will be even a greater difference in the quantity generated when comparing the wet weights.

Thus, reduction of the quantity of sludge is possible not only for silicon but also for fluorine, by adding alkaline sodium to precipitate (generate) fluorine as sodium silicofluoride sludge, before adding calcium in coagulation-sedimentation treatment.

Further, the aspect of the present invention is preferably adapted so that, in the first step, an equivalent or more of alkaline sodium compound relative to fluosilicate in the wastewater is added.

When a content of silicon which constitutes fluosilicate (SiF₆) falls short relative to fluorine, sodium for neutralizing fluorine is needed. With the above structure however, fluorine is neutralized and precipitation of sodium silicofluoride is increased.

The first aspect of the present invention is preferably adapted so that, in the first step, an alkaline sodium compound is added to the wastewater so that pH is adjusted to 3 or more but not more than 6.

By adjusting the pH of the wastewater to 3 or more but not more than 6 in the first step, precipitation of the sodium silicofluoride is increased. This restrains precipitation of silica and calcium fluoride. In other words, the total quantity of sludge generated is reduced.

The first aspect of the present invention is preferably adapted so that, when a content of silicon which constitutes SiF₆ in the wastewater before the first step is less than an equivalent relative to fluorine, a silicon compound is added to the wastewater before the first step so that the quantity of silicon which constitutes SiF₆ is an equivalent relative to fluorine.

When a content of silicon which constitutes SiF₆in the wastewater to be treated is less than an equivalent relative to fluorine, a silicon compound is added to the wastewater in advance so that the content of silicon which constitutes SiF₆ is an equivalent relative to fluorine. This increases the quantity of fluorine sludge generated as the sodium silicofluoride, and reduces the amount of fluorine sludge generated as calcium fluoride. As a result, the total quantity of sludge generated is reduced.

### (Neutral or alkaline wastewater)

When the wastewater that contains fluorine and silicon is neutral or alkaline, an acid such as hydrochloric acid is added to the wastewater to adjust the wastewater to acidic for generating fluosilicate. Then the above described process is applied. This enables reduction of the quantity of sludge generated even in cases of processing neutral or alkaline wastewater that contains fluorine and silicon.

A second aspect of the present invention is a wastewater treatment facility for performing coagulation-sedimentation treatment on wastewater that contains fluorine and silicon by adding calcium compound to the wastewater, including: a first precipitation unit which adds an alkaline sodium compound to the wastewater to precipitate sodium silicofluoride; a first removing unit disposed downstream of the first precipitation unit, which performs solid-liquid separation to remove the sodium silicofluoride precipitated; a second precipitation unit disposed downstream of the first removing unit, which adds a calcium compound to separated liquid from the first removing unit to precipitate calcium fluoride and silicon compound (e.g. silica); and a second removing unit disposed downstream of the second precipitation unit, which performs solid-liquid separation to remove calcium fluoride and a silicon compound (e.g., silica) having been precipitated.

In this structure, silicon and fluorine are precipitated as sodium silicofluoride (Na₂SiF₆) in a preprocess. Doing so enables reduction of a total quantity of sludge generated, as compared with the existing technologies. As already mentioned, it is more advantageous to precipitate silicon as sodium silicofluoride than precipitating the same as silica (SiO₂). This is because silica (SiO₂) has high water content even after dehydration, and is bonded with oxygen. Further precipitating fluorine as sodium silicofluoride requires a smaller quantity of chemical than precipitating fluorine as calcium fluoride. Therefore, the quantity of sludge is reduced.

Further, the second aspect of the present invention is preferably adapted so that an alkaline sodium compound is added to adjust the pH of the wastewater to 3 or more but not more than 6.

This structure increases precipitation of sodium silicofluoride. Therefore, precipitation of silica and calcium fluoride is restrained. In other words, the total quantity of sludge generated is reduced.

### (Neutral or alkaline wastewater)

When wastewater that contains fluorine and silicon is neutral or alkaline, an acid such as hydrochloric acid is added to the wastewater to adjust the wastewater to acidic, thereby generating fluosilicate. Then, with the first unit, an alkaline sodium compound is added to the wastewater to precipitate sodium silicofluoride. This enables reduction of the quantity of sludge generated even when processing neutral or alkaline wastewater that contains fluorine and silicon. Advantageous Effects

With the present invention, the quantity of silica (SiO₂) precipitated (generated) and the quantity of calcium fluoride (CaF₂) precipitated (generated) are both restrained by the structuring elements of the present invention, particularly by addition of an alkaline sodium compound to the wastewater that contains fluorine and silicon, for precipitating the sodium silicofluoride. As the result, the total quantity of sludge generated by processing wastewater that contains fluorine and silicon is reduced as compared with existing technologies.

### BRIEF DESCRIPTION OF THE DRAWINGS

[Fig. 1] Fig. 1 is a process flowchart showing one embodiment of wastewater processing method, according to the present invention.
[Fig. 2] Fig. 2 is a graph indicating the pH of wastewater that contains 1% of fluosilicate (H₂SiF₆), which is measured while adding NaOH to the wastewater, and concentrations of fluorine and silicon in the filtrate.

### BEST MODE FOR CARRYING OUT THE INVENTION

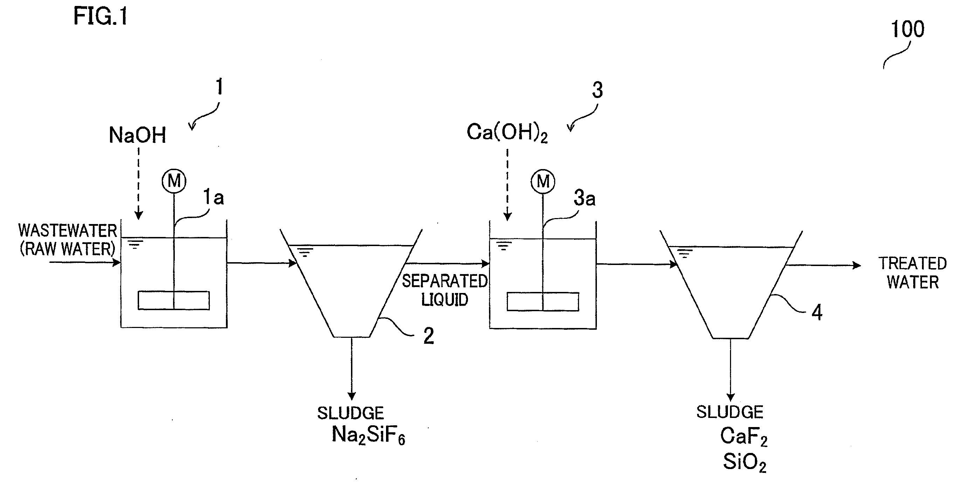

The following describes an embodiment of the present invention, with reference to attached drawings. Fig. 1 is a process flow chart showing one embodiment of a wastewater processing method (a processing method of wastewater that contains fluorine and silicon) according to the present invention.

As shown in Fig. 1, a wastewater treatment facility 100 for implementing the processing method of the present invention includes, sequentially from the upstream of the processing steps, a first reaction tank 1, a first sedimentation tank 2, a second reaction tank 3, and a second sedimentation tank 4. The first reaction tank 1, the first sedimentation tank 2, the second reaction tank 3, and the second sedimentation tank 4 are connected with one another via a pipe or the like.

The first reaction tank 1 includes an agitator 1a, and the second reaction tank 3 includes an agitator 3a. Note that the first reaction tank 1, the first sedimentation tank 2, the second reaction tank 3, and the second sedimentation tank 4 correspond to a first precipitation unit, a first removing unit, a second precipitation unit, and a second removing unit of the wastewater treatment facility of the present invention, respectively. Further, the first step to the second step described below correspond to the pretreatment method of the present invention for wastewater that contains fluorine and silicon.

Note that the wastewater that contains fluorine and silicon, which is to be processed, is usually acidic (acidic wastewater). In acidic wastewater, fluorine reacts with silicon and exists as fluosilicate (H₂SiF₆).

### (First step (Alkaline sodium adding step))

In the first step, sodium hydroxide (NaOH) is added to wastewater that contains fluorine and silicon (acidic raw water) so as to precipitate sodium silicofluoride (Na₂SiF₆). As shown in Fig. 1, the wastewater that contains fluorine and silicon (raw water) is supplied to the first reaction tank 1, and sodium hydroxide solution is supplied to the first reaction tank 1. Then, the wastewater is agitated with the agitator 1a.

When sodium hydroxide solution is added to the wastewater that contains fluorine and silicon and the wastewater is agitated, the fluorine and silicon precipitate in the wastewater as sodium silicofluoride (Na₂SiF₆).

Note that an alkali added to the wastewater that contains fluorine and silicon (raw water) may be any given alkaline sodium compound. For example, sodium carbonate (Na₂CO₃) may be added to the wastewater (raw water) as the alkaline sodium compound, instead of sodium hydroxide (NaOH).

### (Second step (First removing step))

In the second step, solid-liquid separation is performed to eliminate sodium silicofluoride precipitated in the first step. The wastewater sufficiently agitated in the first reaction tank 1 is fed to the first sedimentation tank 2. Then, sodium silicofluoride sludge is deposited at the bottom of the tank. This sodium silicofluoride sludge is taken out (discharged outside the system) from the bottom of the tank. The first step, the second step, and (pretreatment) constitute the coagulation-sedimentation treatment of the first stage.

Note that, as a first removing unit for removing the sodium silicofluoride precipitated through solid-liquid separation, a filter, a centrifugal separator, a centrifugal separator + filter, a filter press, or the like may be adopted.

### (Third step (Calcium adding step))

In the third step, calcium hydroxide (Ca(OH)₂) is added to the wastewater from which sodium silicofluoride has been removed in the second step. This causes precipitation of calcium fluoride (CaF₂) and silica (SiFO₂). The liquid (wastewater) from the first sedimentation tank 2 is fed to the second reaction tank 3. Then, calcium hydroxide solution is supplied to the second reaction tank 3, and the wastewater is agitated with the agitator 3a.

When the liquid (wastewater) from the first sedimentation tank 2 is agitated, while adding thereto calcium hydroxide solution, the fluorine and silicon precipitate in the wastewater as calcium fluoride (CaF₂) and silica (SiO₂).

Note that the calcium compound to be added to the liquid (wastewater) from the first sedimentation tank 2 may be any alkaline calcium compound. For example, calcium carbonate or the like may be added to the liquid (wastewater) from the first sedimentation tank 2, instead of calcium hydroxide.

### (Fourth step (Second removing step))

In the fourth step, solid-liquid separation is performed to remove calcium fluoride and silica precipitated in the third step. The liquid (wastewater) sufficiently agitated in the second reaction tank 3 is fed to the second sedimentation tank 4. Then, sludge containing calcium fluoride and silica is deposited at the bottom of the tank. This sludge is taken out from the bottom of the tank (discharged to the outside of the system). The third step, the fourth step, and (postprocess) constitute the coagulation-sedimentation treatment of the second stage. For example, the sludge containing calcium fluoride and silica, and sodium silicofluoride sludge taken out from the bottom of first sedimentation tank 2 in the second step are subjected to industrial waste treatment.

As described hereinabove, in the processing method, silicon and fluorine are precipitated as sodium silicofluoride (Na₂SiF₆) in the preprocess (second step). This restrains both the quantity of silica (SiO₂) precipitated (generated), which has a high water content even after dehydration, and the quantity of calcium fluoride (CaF₂) precipitated (generated) (precipitated in the fourth step). Sodium silicofluoride is constituted of sodium, silicon, and fluorine. Unlike silica, sodium silicofluoride has no oxygen bonded therewith. Therefore, the quantity of precipitation is restrained, even when comparing the dry weights. In other words, the total quantity of sludge generated is reduced as compared with the existing technologies, by processing fluorine and silicon in the wastewater not only as calcium fluoride sludge and silica sludge, but also as sodium silicofluoride sludge.

### (Description of sludge reduction effect, using reaction formula)

In cases of adding calcium in coagulation-sedimentation treatment of fluorine, calcium fluoride and silica are precipitated as shown in the following formula.

SiF₆ ²⁻+ 3Ca(OH)₂ → 3CaF₂ + SiO₂ + 2H₂O + 2OH⁻

Thus, precipitation per mol of fluosilicate is 294g which is the sum of 3 mol (234g) of calcium fluoride and 1 mol (60g) of silica.

On the other hand, a reaction to precipitate sodium silicofluoride is expressed as the following formula.

SiF₆²⁻ + 2NaOH --> Na₂SiF₆ + 2OH⁻

Therefore, precipitation per mol of fluosilicate is 1 mol (188g) of sodium silicofluoride. This is less than the amount of precipitation in cases of adding calcium. Since the sludge of silica after dehydration has a higher water content than the sludge of sodium silicofluoride, there will be even a greater difference in the quantity generated when comparing the wet weights.

Thus, reduction of the quantity of sludge is possible not only for silicon but also for fluorine, by adding alkaline sodium to precipitate (generate) fluorine as sodium silicofluoride sludge, before adding calcium in coagulation-sedimentation treatment.

Further, in a processing method in which calcium hydroxide is directly added to wastewater that contains fluorine and silicon (raw water), an excessive quantity of calcium is added for fluorine to adjust the wastewater (raw water) to alkaline (i.e., to raise the pH of wastewater (raw water)). The excessive quantity of calcium precipitates as calcium carbonate, and therefore the quantity of sludge is increased. On the other hand, with the pretreatment of the present invention, the concentration of fluorine is lowered before addition of calcium. Therefore, the excess amount of calcium to be added is also reduced. From this view point too, the quantity of sludge generated is reduced as compared with existing technologies.

### (Quantity of alkaline sodium compound to be added in the First step)

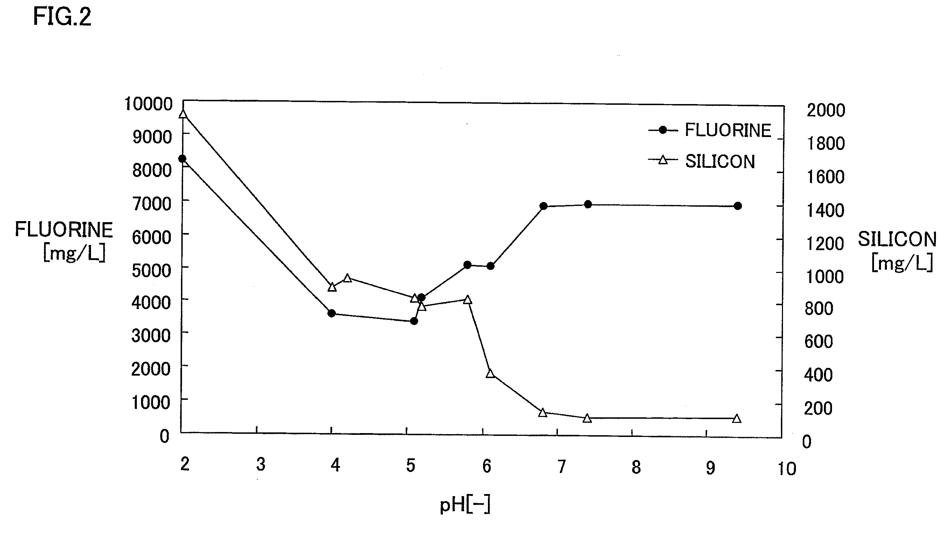

Fig. 2 is a graph indicating the pH of wastewater (raw water) containing 1% of fluosilicate (H₂SiF₆), which is measured while adding sodium hydroxide solution (NaOH) to the wastewater, and concentrations of fluorine and silicon in the filtrate (liquid resulting from solid-liquid separation performed on wastewater after adding NaOH and agitation).

As is understood from Fig. 2, when the pH of wastewater is 4 or more but not more than 6, the fluorine concentration and the silicon concentration are both lowered as compared with those at an initial state of wastewater (pH: 2). This is because fluorine and silicon precipitate in the wastewater as sodium silicofluoride (Na₂SiF₆), and the fluorine and silicon isolated within the wastewater is reduced when filtering the wastewater.

On the other hand, a pH higher than 6 results in a lower silicon concentration and a higher fluorine concentration. This is because sodium silicofluoride (Na₂SiF₆) is broken down, and silicon precipitates as silica (SiO₂) while fluorine is dissolved as sodium fluoride (NaF).

Next, to wastewater with a fluorine concentration of 5.5% and a silicon concentration of 1.4%, an equivalent sodium hydroxide (NaOH) relative to fluosilicate (H₂SiF₆) in the wastewater was added as Na to precipitate sodium silicofluoride (Na₂SiF₆). The wastewater was then subjected to solid-liquid separation. To the resulting water, water quality analysis was conducted. The results are shown in Table 1. Note that the word "equivalent" means "molar equivalent".

**[Table 1]**

| | Wastewater | Treated water |
|---|---|---|
| pH [-] | Less than 2.0 | 3.1 |
| Fluorine concentration [%] | 5.5 | 0.4 |
| Silicon concentration [%] | 1.4 | 0.2 |

As is understood from Table 1, even when the pH of the treated water (wastewater after second step) is 3.1, the fluorine concentration is reduced to 0.4%, and the silicon concentration is reduced to 0.2%. From this, it is further understood that fluorine and silicon precipitated as substantially an equivalent of siliconfluoride (sodium silicofluoride).

In another experiment, an equivalent sodium hydroxide relative to fluosilicate (H₂SiF₆) in the wastewater is added to wastewater as Na to precipitate and remove sodium silicofluoride (first and second steps), and then calcium hydroxide was added to perform coagulation-sedimentation treatment (third and fourth steps) (combination pretreatment). Apart from this, only coagulation-sedimentation treatment was performed on wastewater by adding thereto calcium hydroxide (direct coagulation-sedimentation of Ca). The quantities of sludge generated (produced) are compared and calculated. The results are shown in Table 2. The fluorine concentration and the silicon concentration of the wastewater (raw water) were 5.5%, and 1.4%, respectively. Further, the quantity of wastewater processed was 1 m³.

**[Table 2]**

| | Combination pretreatment | Direct coagulation-sedimentation | Water content |
|---|---|---|---|
| Na₂SiF₆ | 140kg | - | 40% |
| CaF₂ | 14Kg | 188Kg | 40% |
| SiO₂ | 21Kg | 150Kg | 80% |
| Total | 175Kg | 338Kg | |

As is understood from Table 2, a combination of solidifying precipitation of Na (addition of sodium) with coagulation-sedimentation of Ca (addition of calcium) reduced the quantity of sludge generated (produced) to approximately 1/2.

Next, Table 3 shows a result of comparing a case of adding sodium hydroxide (NaOH) as a sodium compound to wastewater that contains fluorine and silicon (raw water), and a case of adding sodium chloride (NaCl) as a sodium compound to wastewater that contains fluorine and silicon. In both cases, an equivalent chemical relative to the fluosilicate (H₂SiF₆) in the wastewater (raw water) was added as Na to precipitate sodium silicofluoride.

**[Table 3]**

| Added chemical | NaOH | NaCl |
|---|---|---|
| pH [-] of treated water | 3.1 | Less than 2.0 |
| fluorine content of raw water [mg/L] | 55000 | |
| Qty. of Na added [mg/L] | 20000 | |
| Qty. of fluorine precipitated [mg/L] | 51380 | 39000 |

As is understood from Table 3, addition of sodium hydroxide (NaOH) to the wastewater that contains fluorine and silicon (raw water) resulted in precipitation of a larger quantity of sodium silicofluoride.

From Fig. 2 and the results shown in Tables 1 to 3, it is understood that the pH of wastewater that contains fluorine and silicon is preferably adjusted to 3 or more but not more than 6, by adding an alkaline sodium compound to the wastewater in the first step. This increases precipitation of sodium silicofluoride. As the result, precipitation of silica and calcium fluoride is restrained. In other words, the total quantity of sludge generated is reduced.

Note that it is preferable to add an equivalent or more of alkaline sodium compound relative to the fluosilicate in the wastewater in the first step. When a content of silicon which constitutes fluosilicate is an equivalent or more relative to fluorine, the quantity of sodium added only needs to be an equivalent relative to the fluosilicate. However, sodium for neutralizing fluorine is further needed when the content of silicon which constitutes fluosilicate is less than an equivalent relative to fluorine. By adding an equivalent or more of alkaline sodium compound relative to fluosilicate in the wastewater, fluorine is neutralized and the pH is increased while precipitation of sodium silicofluoride is increased.

Note that, based on Fig. 2, the range of pH to which the wastewater is adjusted in the first step is 4 or more but not more than 6, preferably 4 or more but not more than 5.5, and more preferably 4 or more but not more than 5.

### (Estimation result of silicon compound addition)

When a content of silicon which constitutes SiF₆in the wastewater before the first step is less than an equivalent relative to fluorine, it is preferable to add a silicon compound such as sodium silicate (Na₂SiO₃) to the wastewater before the first step so that the content of silicon which constitutes SiF₆ is an equivalent relative to fluorine.

Sodium silicate was added to wastewater before the first step so that a content of silicon which constitutes SiF₆ is an equivalent relative to fluorine. Then, sodium silicofluoride is precipitated and removed through the first and second steps, after which the third and fourth steps are performed (combination pretreatment). The resulting quantity of sludge generated (quantity of g-sludge generated/ 6 mol of fluorine) was compared with the quantity of sludge generated through coagulation-sedimentation treatment performed simply by adding calcium to wastewater (direct coagulation-sedimentation of Ca). The results of comparison are shown in Table 4. Starting from a case where the silicon concentration (Si content in the wastewater (raw water) relative to 6 mol of fluorine) in wastewater that contains fluorine and silicon (raw water) is zero (0%), comparison was carried out in every 10% in the silicon concentration, up to a case where the silicon concentration is an equivalent relative to fluorine (i.e., 100%).

Note that, for example, 100 [%] in the leftmost column of Table 4 means 1 mol of silicon for 6 mol of fluorine. Further, in calculation of the quantity of sludge generated by the "combination pretreatment" of the present invention, the quantities of calcium fluoride and silica generated are counted out because these quantities are small as shown in Table 2. The calculation was conducted supposing that all of fluorine and silicon precipitate as sodium silicofluoride. Note further that the quantity of sludge generated is actual quantity generated including water. The water contents of sodium silicofluoride, calcium fluoride, and silica were 40%, 40%, and 80%, respectively.

**[Table 4]**

| Si content in wastewater (raw water) (relative to 6 mol of fluorine) [%] | Qty. of sludge generated (produced) [g-sludge generation Qty. / 6 mol of fluorine] | |
|---|---|---|
| | Combination pretreatment (Na₂SiF₆) | Direct coagulation-sediment ation (CaF₂ + SiO₂) |
| 0 | 313 | 390 |
| 10 | 313 | 420 |
| 20 | 313 | 450 |
| 30 | 313 | 480 |
| 40 | 313 | 510 |
| 50 | 313 | 540 |
| 60 | 313 | 570 |
| 70 | 313 | 600 |
| 80 | 313 | 630 |
| 90 | 313 | 660 |
| 100 | 313 | 690 |

When a content of silicon which constitutes SiF₆ in the wastewater is less than an equivalent relative to fluorine before the first step, a silicon compound is added to the wastewater before the first step so that the content of silicon which constitutes SiF₆ is an equivalent relative to fluorine. The quantity of silicon added causes an increase in the quantity of sludge generated. However, as is understood from Table 4, the quantity of sludge generated is reduced when compared with a case of direct coagulation-sedimentation of Ca.

When a content of silicon which constitutes SiF₆in wastewater to be processed is less than an equivalent relative to fluorine, a silicon compound is added to the wastewater so that the content of silicon which constitutes SiF₆ is an equivalent relative to fluorine. This increases the quantity of fluorine sludge generated as sodium silicofluoride. However, the quantity of calcium fluoride generated as fluorine sludge in the later process is reduced. As the result, the total quantity of sludge generated is reduced.

### (Neutral or alkaline wastewater)

The above embodiment deals with a case where unprocessed wastewater that contains fluorine and silicon is acidic. When unprocessed wastewater that contains fluorine and silicon is neutral or alkaline, an acid such as hydrochloric acid is added to the wastewater to temporarily adjust the same to acidic so as to generate fluosilicate. Then, in the first reaction tank 1, an alkaline sodium compound is added to precipitate sodium silicofluoride. The steps thereafter are the same as the second to fourth steps described above.

An exemplary unit (fluosilicate generating unit) for adding an acid to the wastewater to temporarily adjust the same to acidic for generating fluosilicate is the first reaction tank 1 having a device for adding an acid (not shown). To the upstream of the first reaction tank 1 shown in Fig. 1, a reaction tank (fluosilicate generating cell (corresponding to the fluosilicate generating unit)) similar to the first reaction tank 1 (cell provided with an agitator) may be provided and an acid such as hydrochloric acid may be added to the reaction tank (fluosilicate generating cell).

The present invention is not limited to an embodiment described hereinabove, and may be altered in various ways within the scope of description in Claims.

### REFERENCE NUMERALS

- 1:: First reaction tank
- 2:: First sedimentation tank
- 3:: Second reaction tank
- 4:: Second sedimentation tank
- 100:: Wastewater treatment facility

## Claims

1. A pretreatment method for wastewater that contains fluorine and silicon, which precedes a coagulation-sedimentation treatment to be performed on the wastewater by adding thereto a calcium compound, the method comprising the steps of:
a first step of adding alkaline sodium compound to the wastewater to precipitate sodium silicofluoride; and
a second step of performing solid-liquid separation to remove sodium silicofluoride precipitated in the first step.

2. The pretreatment method according to claim 1, wherein, in the first step, an equivalent or more of alkaline sodium compound relative to fluosilicate in the wastewater is added.

3. The pretreatment method according to claim 1 or 2, wherein, in the first step, an alkaline sodium compound is added to the wastewater so that pH is adjusted to 3 or more but not more than 6.

4. The pretreatment method according to any one of claims 1 to 3, wherein when a content of silicon which constitutes SiF₆ in the wastewater before the first step is less than an equivalent relative to fluorine, a silicon compound is added to the wastewater before the first step so that the content of silicon which constitutes SiF₆ is an equivalent relative to fluorine.

5. The pretreatment method according to any one of claims 1 to 4, wherein the wastewater that contains fluorine and silicon is neutral or alkaline, and an acid is added first to the wastewater to adjust the same to acidic to generate fluosilicate.

6. A wastewater treatment facility for performing coagulation-sedimentation treatment on wastewater that contains fluorine and silicon by adding calcium compound to the wastewater, comprising:
a first precipitation unit which adds an alkaline sodium compound to the wastewater to precipitate sodium silicofluoride;
a first removing unit disposed downstream of the first precipitation unit, which performs solid-liquid separation to remove the sodium silicofluoride precipitated;
a second precipitation unit disposed downstream of the first removing unit, which adds a calcium compound to separated liquid from the first removing unit to precipitate calcium fluoride and silicon compound; and
a second removing unit disposed downstream of the second precipitation unit, which performs solid-liquid separation to remove calcium fluoride and a silicon compound having been precipitated.

7. The wastewater treatment facility according to claim 6, wherein, in the first precipitation unit, the alkaline sodium compound is added to adjust the pH of the wastewater to 3 or more but not more than 6.

8. The wastewater treatment facility according to claim 6 or 7, wherein an acid is added to neutral or alkaline wastewater that contains fluorine and silicon to adjust the wastewater to acidic to generate fluosilicate, and then an alkaline sodium compound is added to the wastewater in the first precipitation unit, to precipitate sodium silicofluoride.
